# FASCICULE DE BREVET EUROPEEN

(11) **EP 1 674 812 B1**
(45) Date de publication et mention de la délivrance du brevet: **12.03.2008**
(21) Numéro de dépôt: 05112161.4
(22) Date de dépôt: 14.12.2005
(51) Int. Cl.: F26B 5/06

(54) **Dispositif et procédé de pilotage de l'opération de déshydratation durant un traitement de lyophilisation**
Vorrichtung und Verfahren zur Steuerung des Entwässerungvorgangs während einer Gefriertrocknungsbehandlung.
Apparatus and process for controlling the dehydration operation during a freeze-drying treatment.

(30) Priorité: 23.12.2004 FR 0453161
(43) Date de publication de la demande: 28.06.2006
(73) Titulaire: Alcatel Lucent, 75008 Paris (FR)
(72) Inventeur: Nomine, M. Cyrille, 74000 Annecy (FR)
(74) Mandataire: Korakis-Ménager, Sophie

(56) Documents cités:
- US-A- 3 020 645
- US-A- 6 060 019
- US-A1- 2003 116 027
- US-A1- 2004 120 869
- DATABASE WPI Section Ch, Week 198728 Derwent Publications Ltd., London, GB; Class J08, AN 1987-197334 XP002337477 & SU 1 272 067 A (MED BIOL PREP STAND) 23 novembre 1986 (1986-11-23)
- CONNELLY ET AL: "Monitor lyophilization with mass spectrometer gas analysis" JOURNAL OF PARENTERAL SCIENCE AND TECHNOLOGY, vol. 47, no. 2, mars 1993 (1993-03), pages 70-75, XP008050233

## Description

La présente invention se rapporte au suivi et au contrôle de la déshydratation de produits pendant un procédé de séchage sous vide, et plus particulièrement à la détection de la fin de la sublimation de l'eau contenue dans des produits soumis à un traitement de lyophilisation.

La lyophilisation est un procédé basse température qui consiste à éliminer par sublimation, la majeure partie de l'eau contenue dans un produit. Les industries alimentaires, pharmaceutiques (vaccins, sérum, médicaments) et les bio-industries (levains) sont les plus fortement concernés par ce procédé qui leur permet d'obtenir la conservation à long terme d'un principe actif (activité biologique et/ou médicamenteuse) dans un produit qui sera stocké à température proche de l'ambiante.

Le suivi de la cinétique de déshydratation en cours de la lyophilisation est essentiel pour maîtriser les coûts de fabrication, mais aussi pour obtenir un produit lyophilisé de qualité. En effet, la stabilité d'un produit conservé dans ces conditions est extrêmement sensible à une très faible variation de la quantité d'eau résiduelle qu'il contient. Un cycle trop court, s'il permet de diminuer les coûts, aboutit à un produit trop humide en sortie. On observe alors généralement une détérioration rapide de la qualité du produit. Inversement, un cycle opératoire trop long risque de provoquer la détérioration du produit par surchauffe, à laquelle s'ajoutent des surcoûts inutiles. Au cours du procédé, une élévation de la température effectuée trop tôt peut conduire à une fusion, même partielle, du produit induisant des défauts d'aspect. Cet accident de fabrication s'accompagne le plus souvent d'une dégradation sensible, voir rédhibitoire, de certaines des propriétés d'usage recherchées pour le produit final (pureté, aptitude à la réhydratation...). Un contrôle fiable du traitement de déshydratation de ces produits se révèle donc indispensable.

Le procédé de lyophilisation comporte deux opérations successives : la congélation et la déshydratation. L'opération de déshydratation comprend deux étapes correspondant à deux phénomènes physiques distincts : d'une part la sublimation des cristaux de glace qui se sont formés au cours de la congélation, souvent appelée "dessiccation primaire", et d'autre part la désorption finale de l'eau non congelée, souvent appelée "dessiccation secondaire". La sublimation est habituellement conduite par apport de chaleur et abaissement de la pression totale (lyophilisation sous vide). Le problème est de déterminer le plus précisément possible le passage d'une étape à une autre et la fin de l'opération.

L'opération de congélation se déroule généralement à pression atmosphérique. L'opération de déshydratation nécessite en premier lieu d'abaisser la pression de vapeur d'eau au-dessous du point triple, puis le passage de l'eau à l'état de vapeur est favorisé par une diminution de la pression. Pendant toute l'étape de sublimation, et tant que le produit contient de la glace, la température du produit va rester identique à sa température de congélation. Lorsque le produit ne contient plus de glace, c'est à dire à la fin de la dessiccation primaire, la température du produit remonte.

La méthode de suivi de la lyophilisation, qui est la plus employée en milieu industriel, est celle de la mesure de l'évolution de la température du produit en cours de traitement. Elle permet notamment de déterminer la fin de la dessiccation primaire. Des sondes de température sont placées au coeur du produit avant congélation, et l'évolution du signal de température est ensuite enregistrée pendant le traitement de lyophilisation. Tant que la sonde reste dans le coeur congelé du produit, la température mesurée évolue très lentement. En revanche, dès que la sonde ne se trouve plus au contact de la glace, la température mesurée évolue très rapidement ce qui traduit l'accumulation de chaleur dans la couche sèche. L'arrêt du traitement de lyophilisation (ou le changement de consigne pour commencer l'étape de dessiccation secondaire) correspond au moment où toutes les sondes de température, placées en différents points de l'enceinte de traitement, indiquent la même valeur. En effet les produits placés dans une même enceinte peuvent avoir des vitesses de dessiccation différentes, de telle sorte qu'un décalage de plusieurs heures dans l'atteinte de la température de référence peut être observé entre les différentes sondes. La marge de sécurité qui consiste à attendre pendant plusieurs heures que toutes les valeurs de température soient identiques pour arrêter le cycle, impose un surcoût du procédé parfois important pour une efficacité réduite. De plus le nombre de sondes utilisées est généralement peu élevé (de l'ordre de 4 ou 5 sondes pour 150 000 produits à lyophiliser) ce qui peut engendrer jusqu'à 10% de rebus sur un lot de produit.

D'autres systèmes de mesure ont été envisagés pour assurer le suivi de la cinétique de lyophilisation sous vide, comme par exemple la mesure de la résistance électrique ou de la constante diélectrique du produit en cours de traitement. Le passage du front au niveau des électrodes placées dans le produit fait varier ces grandeurs. En outre, la constante diélectrique de l'eau liquide étant très supérieure à celle de la glace, il est possible de détecter les phénomènes de fusion.

L'inconvénient principal de ces méthodes indirectes est leur caractère local et le manque de sensibilité. Les courbes en température ne sont pas suffisamment précises et ne permettent pas, par exemple, de déterminer avec exactitude la fin de la dessiccation primaire.

Il a alors été envisagé une méthode de pilotage qui prenne en compte l'ensemble du système. On a notamment proposé d'utiliser un suivi cinétique basé sur des bilans thermiques réalisés au niveau des plaques chauffantes et du piège à glace du lyophilisateur. Le suivi de la consommation en azote liquide du piège froid permet d'établir le bilan thermique. Théoriquement cette méthode permet de connaître à tout instant l'intensité du transfert de chaleur et en conséquence, la quantité de vapeur d'eau produite. Mais la qualité du bilan thermique souffre de la précision des sondes de température et des pertes thermiques difficilement quantifiables.

La mesure de la masse des plateaux contenant le produit ou de celle du condenseur permet de suivre la cinétique de perte en eau au cours du traitement. Le système porte-plateaux ou le piège froid fixé sur un bâti sont équipés de jauges de contraintes dont la déformation peut être corrélée à la quantité d'eau extraite du produit et piégée sous forme de glace. Malheureusement cette méthode apparemment fiable ne peut pas être adaptée facilement à la majorité du parc des lyophilisateurs existants, et le coût en reste élevé. Un bilan matière sur la vapeur d'eau dégagée dans l'enceinte peut également être obtenu par mesure directe au moyen d'un capteur de pression de vapeur d'eau. Le problème de la précision de la mesure en fin de procédé reste posé pour toutes ces méthodes.

Dans le cas où le condenseur est situé à l'extérieur à l'enceinte de lyophilisation, il est possible de suivre l'évolution de la pression totale dans l'enceinte de lyophilisation après fermeture d'un clapet reliant l'enceinte au piège (méthode barométrique). Aux fuites d'air près, toute élévation rapide de la pression témoigne d'une vitesse élevée de sublimation et traduit la présence de glace résiduelle. La finesse de la méthode (impact de la remontée de pression sur la cinétique de lyophilisation) et sa précision en fin de cycle (faible dégagement de vapeur) en définissent les limites.

Plus récemment une méthode basée sur la mesure par spectrométrie de masse a été envisagée (Voir p.e. l'article "Monitor Lyophilization with Mass Spectrometer Gas Analysis J. P. Connelly et al, Journal of Parenteral Science and Technology, vol. 47, no. 2, Mars 1993, pages 70-75). Cette méthode consiste en l'analyse des bilans de matière sur l'ensemble de l'enceinte de lyophilisation. Cette méthode est celle qui permet la mesure la plus précise et la plus uniforme conduisant à un réel suivi de la déshydratation. Malheureusement, dans certaines industries aseptisées, comme le domaine pharmaceutique, la stérilisation des appareils de mesure est exigée. Le spectromètre de masse ne résiste pas aux contraintes de stérilisation et ne peut donc pas être stérilisé. Pour y remédier, une vanne munie d'un filtre est intercalée entre le spectromètre de masse et l'enceinte. Mais cette méthode présente certaines limitations, engendrées notamment par le colmatage des filtres. En effet il existe un risque de contamination de l'enceinte de lyophilisation à travers ce filtre. De plus, l'utilisation d'un spectromètre de masse est onéreuse car elle nécessite l'utilisation d'une pompe secondaire et le renouvellement fréquent de composants consommables comme le filament.

Comme la méthode utilisant un spectromètre de masse, les autres méthodes proposées posent également des problèmes si une stérilisation s'avère nécessaire.

La présente invention a donc pour but de proposer un dispositif et un procédé de pilotage de l'opération de déshydratation au cours d'un traitement de lyophilisation qui ne présente pas les inconvénients précités des méthodes connues. En particulier l'invention propose un dispositif et un procédé permettant de déterminer de manière précise la fin de l'étape de dessiccation primaire. L'invention propose aussi un dispositif et un procédé qui soit compatible avec des exigences élevées d'asepsie, et notamment qui permettent d'éviter d'avoir recours à la stérilisation.

L'objet de la présente invention est un dispositif de pilotage de l'opération de déshydratation durant un traitement de lyophilisation mis en oeuvre dans une enceinte reliée à une ligne de vide, comportant un analyseur des gaz contenus dans ladite enceinte. L'appareil d'analyse des gaz comprend :
- un système d'ionisation des gaz comprenant une source de plasma, au contact des gaz, combinée avec un générateur apte à générer un plasma à partir des gaz, et
- un système d'analyse des gaz ionisés comprenant un capteur de radiation situé à proximité de la zone de génération du plasma connecté à un appareil d'analyse de l'évolution du spectre radiatif émis par le plasma.

Le dispositif selon l'invention va permettre de suivre l'évolution des espèces présentes dans l'enceinte de lyophilisation lors de l'opération de déshydratation en analysant l'évolution des raies caractéristiques de ces espèces dans le spectre optique de la lumière émise par le plasma des espèces excitées.

Un plasma est un système statistique formé de particules chargées et de particules neutres qui peut-être créé artificiellement par ionisation d'un gaz. Pour cela, il faut apporter de l'énergie afin d'arracher des électrons aux particules de gaz et obtenir ainsi un système d'ions, d'électrons et d'atomes. C'est un ensemble globalement neutre de particules qui bougent aléatoirement dans toutes les directions. Le retour des molécules excitées à leur état initial génère l'émission d'un rayonnement électromagnétique. Sous des pressions réduites apparaissent les plasmas non thermiques ou plasmas froids : les plasmas froids sont les plasmas les plus utilisés pour leurs propriétés germicides. De nombreuses études ont été réalisées concernant les propriétés bactéricides ou virulicides des plasmas, sur des micro-organismes de référence tels que Eschérichia coli, Bacillus subtilis, Candida albicans, Streptococcus...

La source de plasma est placée dans une chambre d'excitation communiquant avec l'enceinte. Les gaz contenus dans l'enceinte de traitement sont amenés dans la chambre d'excitation en contact avec l'intérieur de l'enceinte de lyophilisation contenant les produits à déshydrater. Les gaz sont ionisés sous forme d'un plasma et la lumière émise à travers les parois de la chambre est analysée.

Dans une enceinte confinée, en général sous vide partiel, il est possible de transférer de l'énergie à un gaz plasmagène en créant une décharge électrique :
- soit par un système comportant des électrodes (décharge sous champ électrique de type luminescente, à basse pression, ou de type couronne sous la pression atmosphérique),
- soit par un système sans électrodes (décharge sous champ électromagnétique variable de hautes fréquences ou micro-ondes).
   Grâce à la conception adéquate du système et au choix approprié des gaz et vapeurs qui permettent de générer le plasma, il est possible d'atteindre une température ambiante assez basse, même en milieu hautement réactif.
   Par ailleurs, les espèces actives, capables de détruire rapidement les micro-organismes, ne sont créées que lorsque le système est mis sous tension et sont immédiatement éliminées lorsque la puissance d'entrée est coupée. Il n'existe par conséquent aucun danger pour l'environnement une fois le processus terminé.
   Selon une forme d'exécution de l'invention, les parois de la chambre sont en quartz, en verre optique (notamment en BK7) ou en oxyde d'aluminium (notamment en saphir).
   Ce dispositif se distingue des dispositifs connus par l'avantage d'être complètement adaptée aux exigences de stérilisation. En effet, le dispositif ne nécessite aucun transfert de matière car il agit sur la matière pour la quantifier sans la déplacer. Pour cela seul l'intérieur de la chambre d'excitation du dispositif entre en contact avec l'environnement interne de l'enceinte de lyophilisation. Cette chambre prend le plus souvent la forme d'un tube généralement fait en quartz, mais il peut être également fait en verre optique, comme le BK7, ou en oxyde d'aluminium, comme le saphir, ou en tout autre matériau permettant le passage des ondes électromagnétiques tout en permettant l'accès à la lumière. Il peut être stérilisé sans aucune difficulté.
   De plus, le plasma est lui-même connu pour ses propriétés stérilisantes. Le premier atout est l'émission d'UltraViolets dégagés par le plasma, qui est germicide. D'autre part, les composés OH et O sont des composants essentiels de la stérilisation par plasma utilisés dans le médical. On retrouve ces composés dans l'application de la lyophilisation puisque des molécules d'eau sont « craquées » et donc des composés OH et O sont générés. Les procédés plasma sont en effet, de nouvelles techniques émergentes dont le potentiel est particulièrement prometteur dans plusieurs secteurs. Ainsi, en est-il de la stérilisation où l'efficacité de la technique plasma a été prouvée et sa mise en oeuvre appliquée sur plusieurs dispositifs médicaux sensible.
   En outre ce dispositif garantit une mesure globale car il permet de visualiser la sublimation de la totalité des produits d'un lot, et non pas un faible échantillon du lot de produits.
   De préférence la source de plasma est produite par couplage inductif. Dans ce cas le générateur est un générateur radiofréquence. La source plasma peut aussi être une source micro-onde utilisant le principe de propagation d'une surface d'onde ou de type cavité résonnante. Dans ce cas le générateur est un générateur micro-onde.
   Selon une première variante, le générateur génère le plasma par induction au moyen d'un solénoïde d'induction enroulé autour et à l'extérieur de la chambre.
   Selon une autre variante, le générateur génère le plasma par induction au moyen d'une antenne excitatrice disposée à l'intérieur de la chambre. Dans ce cas l'antenne est préalablement recouverte d'un isolant stérile. Avantageusement l'antenne est un manomètre de Penning. En effet, le principe de cette jauge de pression consiste à appliquer une haute tension entre deux électrodes pour former un plasma. Le courant de décharge est proportionnel à la pression. Ce type de jauge couramment utilisée pour la mesure de pression trouve ici une nouvelle application.
   De préférence l'appareil d'analyse de l'évolution du spectre radiatif est un spectromètre d'émission optique qui mesure les émissions optiques. A la place du spectromètre, il est possible d'utiliser un capteur de luminosité permettant de sélectionner une raie spectrale caractéristique notamment de la vapeur d'eau, bien que la résolution soit légèrement moins bonne. Avantageusement on peut également utiliser un filtre optique ou une combinaison de filtres optiques permettant de sélectionner la ou les longueurs d'onde à surveiller. La sélection de plusieurs raies peut être envisagée de manière à utiliser par exemple le rapport des raies H2O / N2 et d'obtenir ainsi une information indépendante de la pression. Ce mode de réalisation présente l'avantage de diminuer le coût du dispositif par rapport au dispositif incluant un spectromètre optique.
   Le dispositif selon l'invention peut être appliqué facilement sur des installations de lyophilisation. En effet, il ne nécessite aucune modification majeure de l'enceinte de lyophilisation et, contrairement au spectromètre de masse, ne nécessite aucun pompage supplémentaire car le niveau de vide nécessaire au fonctionnement du dispositif est le même que celui nécessaire au procédé de lyophilisation.
   L'invention a aussi pour objet un procédé de pilotage de l'opération de déshydratation durant un traitement de lyophilisation dans une enceinte au moyen du dispositif selon l'une des revendications précédentes. On détermine la fin de l'étape de dessiccation primaire de l'opération de déshydratation par analyse des gaz présents dans l'enceinte au moyen d'une source de plasma couplée à un appareil d'analyse de l'évolution du spectre radiatif émis par le plasma. De préférence l'appareil d'analyse de l'évolution du spectre radiatif est un spectromètre d'émission optique. De préférence encore la source de plasma est produite par couplage inductif.
   La présente invention a comme avantage de proposer une méthode de suivi précise, uniforme et stérile de l'opération de déshydratation, permettant notamment de déterminer la fin de l'étape de dessiccation primaire, lors d'un traitement lyophilisation à l'échelle industrielle. Cette méthode va permettre une amélioration de la productivité tout en diminuant le rebus en fin de cycle.
   Ce procédé permet de s'affranchir de la variabilité du traitement de lyophilisation. En effet selon la quantité de produit et la nature des produits à lyophiliser, les différentes étapes du traitement peuvent avoir des durées différentes. Ce procédé permet aussi un gain de temps appréciable : le début de l'étape de dessiccation secondaire, actuellement déterminé empiriquement dans les procédés industriels, peut être déterminé de manière automatique au moyen du dispositif selon la présente invention. Ce qui implique des économies sur l'azote utilisé pour réguler la pression. Les variations des paramètres du procédé qui peuvent intervenir, suivant la quantité de produit et la nature du produit à lyophiliser, durant l'opération de déshydratation sont naturellement prises en compte par le dispositif. Cette méthode peut également permettre de voir la répétitivité du procédé d'un lot à l'autre. En effet si pour la même quantité de produit et les mêmes paramètres de procédé, les signaux sont différents, cela peut indiquer un éventuel problème sur le lyophilisateur, comme une fuite par exemple.
   D'autres caractéristiques et avantages de la présente invention apparaîtront au cours de la description suivante de modes de réalisation donnés à titre illustratif, mais nullement limitatif, et dans le dessin annexé sur lequel la figure unique représente
- la figure 1 représente le système d'ionisation du dispositif de l'invention selon un mode de réalisation particulier,
- la figure 2 montre une installation pour le traitement de produits par lyophilisation mettant en oeuvre l'invention,
- la figure 3 donne la variation de l'intensité lumineuse (en unités arbitraires) des raies de l'hydrogène et de l'azote en fonction du temps t en secondes.

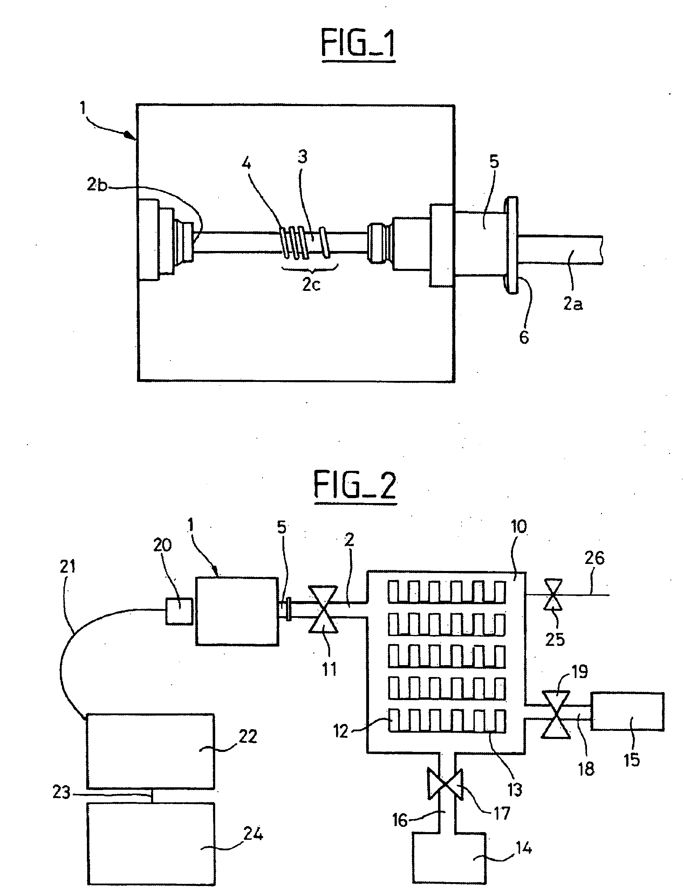

Sur la figure 1 est schématisé un mode de réalisation particulier du système d'ionisation 1 du dispositif selon l'invention. Un tube 2 en quartz possède une extémité ouverte 2a communiquant avec l'enceinte dans laquelle a lieu le traitement de lyophilisation et une extrémité fermée 2b en forme de lentille asphérique qui permet une collecte efficace de la lumière. La source de plasma 3 se forme dans le tube 2 au niveau du solénoïde d'induction 4. Le solénoïde 4, ou antenne excitatrice, est enroulé à l'extérieur du tube 2 autour de la zone de formation du plasma ou chambre d'excitation 2c.

La jonction 5 (référence DN16 selon la norme ISO-KF) est en inox 316. Un joint 6 assure l'étanchéité entre le tube 2 et la jonction 5. Ce joint 6 est en fluoroélastomère, comme le "Viton®", afin de pouvoir résister à des températures élevées.

Cet appareil est adapté aux exigences de stérilisation qui existe dans le domaine de la lyophilisation (vapeur d'eau à 150°C et à 2 bars de pression) : en effet, la seule partie en contact avec le milieu gazeux est le tube dans lequel se forme le plasma, le joint d'étanchéité et la jonction DN16. Le plasma est créé par une antenne extérieure ce qui évite ainsi toute contamination ou dépôt à l'intérieur de l'enceinte de lyophilisation. Par ailleurs la source plasma est peu encombrante (86mm X 50mm X 115mm ici par exemple), et peut donc se placer facilement sur une enceinte de lyophilisation.

La figure 2 représente le dispositif selon un mode particulier de réalisation de l'invention. Le système d'ionisation 1 est associé à une enceinte 10 de lyophilisation par sa jonction 6 et le tube 2 portant une vanne 11 L'enceinte de lyophilisation 10 qui contient les produits à déshydrater 12 comprend classiquement trois éléments : une source chauffante 13, un piège de récupération de la vapeur d'eau 14 et une pompe à vide primaire 15. Le piège 14 est connecté à l'enceinte 10 par un conduit 16 comportant une vanne 17. La pompe à vide est connecté à l'enceinte 10 par un conduit 18 comportant une vanne 19. Une fois terminée l'opération de congélation, qui peut avoir été effectuée à l'extérieur ou à l'intérieur de l'enceinte 10 de lyophilisation, la pompe à vide 15 est mise en route. Le pompage par la pompe 15 a pour but de permettre l'abaissement de la pression totale dans l'enceinte 10, puis le maintien de la pression atteinte à des valeurs compatibles avec les conditions de sublimation pendant toute l'opération de déshydratation. La sublimation s'effectue par apport de chaleur au produit, par conduction ou rayonnement, au moyen de la source chauffante 13, en évitant la survenue de la fusion par maintien de la température au-dessous du point triple. La vapeur d'eau formée est alors récupérée par le piège 14.

Lorsque l'opération de déshydratation débute, la pression baisse à l'intérieur de l'enceinte 10 et un plasma se forme à l'intérieur du tube 2 au niveau de la chambre d'excitation 2c. La lumière émise par le plasma est détectée à l'extrémité 2b fermée du tube 2 par un capteur 20 comme une fibre optique. Cette lumière est alors conduite, par exemple par une fibre optique 21, vers un spectromètre d'émission optique 22 pour y être analysée. La lumière émise est caractéristique des composés présents au sein du plasma, et donc dans l'enceinte 10 de lyophilisation. Pour cette application, des raies caractéristiques de l'hydrogène (656nm par exemple) et de l'azote (337nm par exemple) sont suivies au cours de l'opération de déshydratation. Les informations peuvent être enregistrées et traitées grâce à une connexion 23 à un ordinateur 24.

Lors de l'étape de dessiccation primaire, la pression dans l'enceinte 10 de lyophilisation est stabilisée au moyen de la vanne de régulation 25 placée sur le conduit 26 d'alimentation en azote. Lorsque la pression baisse du fait du ralentissement de la sublimation, la vanne 25 s'ouvre pour injecter plus d'azote. Lorsque la sublimation de l'eau est importante, peu d'azote est injecté.

L'opération de déshydratation se déroule sous un vide généralement compris entre 0,005 et 0,5 mbar. A ce titre, une source plasma produite par couplage inductif, dite de type ICP (Inductive Coupled Plasma), est bien adaptée puisque sa plage de pression de fonctionnement est de 0,005 à 10 mbar. Il n'y a donc pas besoin de recourir à un pompage secondaire, comme pourrait le nécessiter un spectromètre de masse.

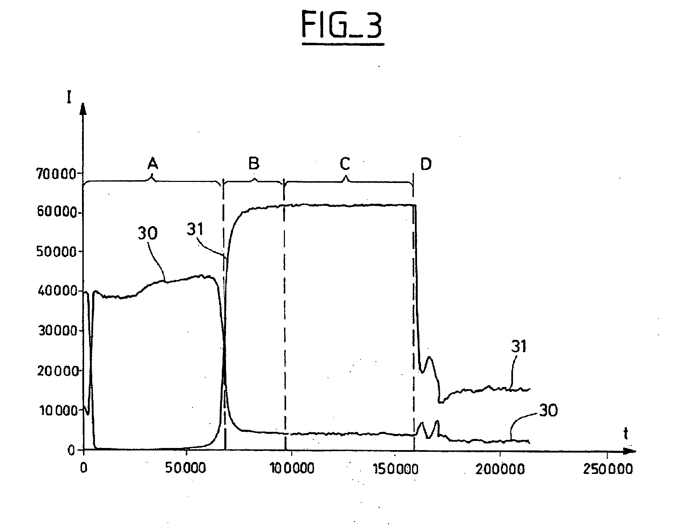

La figure 3 montre les courbes 30, 31 obtenues par l'analyse du spectre optique. Ces courbes 30, 31 représentent l'évolution dans le temps des raies d'hydrogène à une longueur d'onde de 656 nm (courbe 30) qui représentent la vapeur d'eau, et des raies d'azote à une longueur d'onde de 337 nm (courbe 31) au cours de l'opération de déshydratation. Lors de l'étape de dessiccation primaire, une grande quantité d'eau est détectée due à la sublimation de la glace (partie A). Cette quantité de vapeur d'eau évolue peu durant toute la phase de sublimation. Lorsque la sublimation est terminée, le signal de l'hydrogène diminue rapidement et inversement, celui de l'azote augmente. En effet, lors de cette transition, la vapeur d'eau est remplacée par l'azote injecté dans le lyophilisateur (partie B). Enfin la stabilisation des deux courbes (partie C) marque la fin de la sublimation et donc la fin de la dessiccation primaire. Les courbes 30, 31 de la figure 3 de suivi du traitement montrent que le changement de consigne correspondant au passage à l'étape de déshydratation secondaire est déclenché au point D. La mesure connue de la fin de la dessiccation primaire utilisant un suivi par des capteurs de température était indiquée plus tôt, l'étape étant encore incomplètement terminée.

Bien entendu la méthode de détection de la fin de l'étape de dessiccation primaire telle qu'elle vient d'être décrite peut s'appliquer de la même manière à la détection de la fin de l'étape de dessiccation secondaire.

La présente invention n'est pas limitée aux modes de réalisation qui ont été explicitement décrits, mais elle inclut les diverses variantes et généralisations qui sont à la portée de l'homme du métier.

## Revendications

1. Dispositif de pilotage de l'opération de déshydratation durant un traitement de lyophilisation mis en oeuvre dans une enceinte (10) reliée à une ligne de vide (18), comportant un analyseur des gaz contenus dans ladite enceinte, **caractérisé en ce que** ledit analyseur des gaz comprend :
- un système d'ionisation (1) des gaz comprenant une source de plasma (3), au contact desdits gaz, combinée avec un générateur apte à générer un plasma à partir desdits gaz,
- un système d'analyse des gaz ionisés comprenant un capteur de radiation (20) situé à proximité de la zone de génération du plasma connecté à un appareil d'analyse (22) de l'évolution du spectre radiatif émis par ledit plasma.

2. Dispositif selon la revendication 1, dans lequel ladite source de plasma (3) est placée dans une chambre d'excitation (2c) communiquant avec ladite enceinte (10).

3. Dispositif selon l'une des revendications 1 et 2, dans lequel ladite source de plasma est produite par couplage inductif.

4. Dispositif selon la revendication 3, dans lequel ledit générateur est un générateur radiofréquence.

5. Dispositif selon la revendication 4, dans lequel ledit générateur génère ledit plasma par induction au moyen d'un solénoïde d'induction (4) enroulé autour et à l'extérieur de ladite chambre (2c).

6. Dispositif selon la revendication 4, dans lequel ledit générateur génère ledit plasma par induction au moyen d'une antenne excitatrice disposée à l'intérieur de ladite chambre (2c).

7. Dispositif selon la revendication 6, dans lequel ladite antenne est un manomètre de Penning.

8. Dispositif selon l'une des revendications précédentes, dans lequel ledit analyseur de l'évolution du spectre radiatif est un spectromètre d'émission optique (22).

9. Dispositif selon l'une des revendications 2 à 8, dans lequel les parois de ladite chambre (2c) sont en quartz, en verre optique ou en oxyde d'aluminium.

10. Procédé de pilotage de l'opération de déshydratation durant un traitement de lyophilisation dans une enceinte (10) au moyen du dispositif selon l'une des revendications précédentes, **caractérisé par le fait que** l'on détermine de la fin de l'étape de dessiccation primaire de l'opération de déshydratation par analyse des gaz présents dans ladite enceinte (10) au moyen d'une source de plasma (3) couplée à un appareil d'analyse (22) de l'évolution du spectre radiatif émis par ledit plasma.

11. Procédé selon la revendication 10, dans lequel ledit analyseur de l'évolution du spectre radiatif est un spectromètre d'émission optique (22).

12. Procédé selon l'une des revendications 10 et 11, dans lequel ladite source de plasma (3) est produite par couplage inductif.

## Claims

1. A device for controlling dehydration during freeze-drying in an enclosure (10) connected to a vacuum line (18), said device including an analyser for analysing the gases contained in said enclosure, **characterised in that** said gas analyser comprises:
- a system (1) for ionising the gases comprising a plasma source (3) in contact with said gases combined with a generator adapted to generate a plasma from said gases, and
- a system for analysing ionised gases comprising a radiation sensor (20) situated in the vicinity of the area of generation of the plasma connected to apparatus (22) for analysing evolution of the radiation spectrum emitted by said plasma.

2. A device according to claim 1, wherein said plasma source (3) is in an excitation chamber (2c) communicating with said enclosure (10).

3. A device according to claim 1 or claim 2, wherein said plasma source is produced by inductive coupling.

4. A device according to claim 3, wherein said generator is a radio-frequency generator.

5. A device according to claim 4, wherein said generator generates said plasma inductively by means of an induction solenoid (4) wound around the outside of said chamber (2c).

6. A device according to claim 4, wherein said generator generates said plasma inductively by means of an excitation antenna inside said chamber (2c).

7. A device according to claim 6, wherein said antenna is a Penning manometer.

8. A device according to any one of the preceding claims, wherein said analyser for analysing the evolution of said radiation spectrum is an optical emission spectrometer (22).

9. A device according to any of claims 2 to 8, wherein the walls of said chamber (2c) are of quartz, optical glass or aluminium oxide.

10. A method of controlling dehydration during freeze-drying in an enclosure (10) by means of a device according to any preceding claims, which method is **characterised in that** the end of the primary desiccation step of the dehydration operation is detected by analysing the gases in said enclosure (10) using a plasma source (3) connected to apparatus (22) for analyzing the evolution of the radiation spectrum emitted by said plasma.

11. A device according to claim 10, wherein said analyser for analysing the evolution of said radiation spectrum is an optical emission spectrometer (22).

12. A method according to claim 10 or claim 11, wherein said plasma source (3) is produced by inductive coupling.

## Patentansprüche

1. Vorrichtung zur Steuerung des Entwässerungsvorgangs während einer Gefriertrocknungsbehandlung, die in einer Kammer (10) ausgeführt wird, die mit einer Vakuumleitung (18) verbunden ist, beinhaltend einen Analysator für die in dieser Kammer enthaltenen Gase, **dadurch gekennzeichnet, dass** dieser Gasanalysator folgendes einschließt:
- ein System zur Ionisierung (1) der Gase, beinhaltend eine Plasmaquelle (3) im Kontakt mit diesen Gasen, kombiniert mit einem Generator, der im Stande ist, ausgehend von diesen Gasen ein Plasma zu generieren,
- ein System zur Analyse der ionisierten Gase mit einem Strahlungssensor (20), der in der Nähe des Generierungsbereichs des Plasmas liegt, angeschlossen an ein Gerät zur Analyse (22) der Entwicklung des von diesem Plasma emittierten Strahlungsspektrums.

2. Vorrichtung gemäß Anspruch 1, bei der diese Plasmaquelle (3) in einer Anregungskammer (2c) angeordnet wird, die mit dieser Kammer (10) verbunden ist.

3. Vorrichtung gemäß einem der Ansprüche 1 und 2, bei der diese Plasmaquelle durch induktive Ankopplung erzeugt wird.

4. Vorrichtung gemäß Anspruch 3, bei der dieser Generator ein Hochfrequenzgenerator ist.

5. Vorrichtung gemäß Anspruch 4, bei der dieser Generator dieses Plasma durch Induktion mittels einer Induktionsspule (4), die um die Kammer herum und außerhalb dieser Kammer (2c) gewickelt ist, generiert.

6. Vorrichtung gemäß Anspruch 4, bei der dieser Generator dieses Plasma durch Induktion mittels einer Anregeantenne, die im Inneren dieser Kammer (2c) angeordnet ist, generiert.

7. Vorrichtung gemäß Anspruch 6, bei der diese Antenne ein Penning-Manometer ist.

8. Vorrichtung gemäß einem der vorstehenden Ansprüche, bei der dieser Analysator für die Analyse der Entwicklung des Strahlungsspektrums ein optisches Emissionsspektrometer (22) ist.

9. Vorrichtung gemäß einem der Ansprüche 2 bis 8, bei der die Wände dieser Kammer (2c) aus Quarz, optischem Glas oder Aluminiumoxid bestehen.

10. Verfahren zur Steuerung des Entwässerungsvorgangs während einer Gefriertrocknungsbehandlung in einer Kammer (10) vermittels der Vorrichtung gemäß einem der vorstehenden Ansprüche, **dadurch gekennzeichnet, dass** man das Ende des Primärtrocknungsschritts des Entwässerungsvorgangs durch Analyse der in dieser Kammer (10) vorhandenen Gase mittels einer Plasmaquelle (3) bestimmt, die an eine Vorrichtung zur Analyse (22) der Entwicklung des von diesem Plasma emittierten Strahlungsspektrums gekoppelt ist.

11. Verfahren gemäß Anspruch 10, bei dem diese Vorrichtung zur Analyse der Entwicklung des Strahlungsspektrums ein optisches Emissionsspektrometer ist.

12. Verfahren gemäß einem der Ansprüche 10 und 11, bei dem diese Plasmaquelle (3) durch induktive Ankopplung erzeugt wird.
